# EUROPÄISCHE PATENTSCHRIFT

(11) **EP 2 649 229 B1**
(45) Veröffentlichungstag und Bekanntmachung des Hinweises auf die Patenterteilung: **17.03.2021**
(21) Anmeldenummer: 11791578.5
(22) Anmeldetag: 07.12.2011
(51) Int. Cl.: D06F 37/20, H02K 5/00, H02K 5/15

(54) **GEHÄUSELOSER ELEKTROMOTOR FÜR EIN HAUSHALTSGERÄT**
FRAMELESS ELECTRIC MOTOR FOR A HOUSEHOLD APPLIANCE
MOTEUR ÉLECTRIQUE SANS BOÎTIER POUR UN APPAREIL MÉNAGER

(30) Priorität: 10.12.2010 DE 102010062822
(43) Veröffentlichungstag der Anmeldung: 16.10.2013
(73) Patentinhaber: BSH Hausgeräte GmbH, 81739 München (DE)
(72) Erfinder: BINDER, Alfred, 72406 Bisingen (DE)
(86) Internationale Anmeldenummer: PCT/EP2011/072128
(87) Internationale Veröffentlichungsnummer: WO 2012/076622

(56) Entgegenhaltungen:
- EP-A2- 0 948 115
- EP-A2- 2 037 032
- WO-A2-2009/083363
- DE-A1-102009 005 885
- DE-U1-202006 008 934
- US-A- 5 852 338
- US-A1- 2005 269 896

## Beschreibung

Die Erfindung betrifft einen gehäuselosen Elektromotor, insbesondere bürstenlosen Elektromotor, mit einem Rotor, einem ein Statorblechpaket aufweisenden Stator und stirnseitig an dem Statorblechpaket befestigten Lagerschilden.

Aus Dokument DE 196 05 523 A1 ist ein gehäuseloser Elektromotor mit an dem Stator befestigten Lagerschilden bekannt. Die Lagerschilde des Elektromotors dienen zum einen zur Lagerung der Rotorwelle und zum anderen zur stirnseitigen Abdeckung des Stators. In der Regel sind derartige Lagerschilde aus einem Metallguss hergestellt. Die in DE 196 05 523 A1 gezeigten Lagerschilde weisen zudem eine Montageeinrichtung in Form von mit Befestigungsösen ausgestatteten Fixierarmen auf, mit deren Hilfe der Elektromotor montiert werden kann.

Die EP 2 037 032 A2 beschreibt eine Motorhalterung zum Befestigen einer elektrischen Maschine in oder an einem Haushaltsgerät, insbesondere einer Waschmaschine. Die elektrische Maschine weist eine Steuerschaltung auf. Hierbei dient die Motorhalterung zum Abführen der Wärme der Steuerschaltung.

Aus der US 5,8522,338 A ist eine gehäuselose elektrische Maschine für ein Haushaltsgerät bekannt. Die elektrische Maschine weist einen Rotor und einen Stator mit einem Statorblechpaket auf. An dem Statorblechpaktet ist ein A-seitiges Lagerschild und ein B-seitiges Lagerschild angeordnet.

Die US 2005/0269896 A1 beschreibt eine Motorhalterung für einen Stator einer elektrischen Maschine. Die Motorhalterung kann insbesondere für Waschmaschinen verwendet werden. Dabei kann die Motorhalterung derart ausgebildet sein, dass ihre Form mit der äußeren Form des Stators korrespondiert.

Des Weiteren ist in der DE 10 2009 005 885 A1 ein Servoantrieb beschrieben, der mehrere Komponenten aufweist, die im Zusammenspiel miteinander unterschiedliche Teilfunktionalitäten des Servoantriebs bereitstellen können.

Ferner ist in der EP 0 948 115 A2 ein Gehäuse für eine elektrische Maschine offenbart, das ein Joch und einen vorderen Bügel aufweist. Hierbei ist es vorgesehen, dass die Befestigungselemente, die zur Befestigung des Jochs an dem Bügel dienen, auch zur Befestigung des Gehäuses an einem Körper verwendet werden.

Schließlich beschreibt die WO 2009/083363 A2 eine elektrische Maschine mit einem Rotor und einem Stator, der ein Statorblechpaket umfasst. Die elektrische Maschine weist zudem Lagerschilde auf, an denen der Rotor gelagert ist.

Wird dieser Elektromotor als Antrieb in Waschmaschinen oder Wäschetrockneren eingesetzt, so kann er mit durch die Befestigungsösen der Lagerschilde geführten Schrauben beispielsweise an einer dafür vorgesehenen Montageposition des Laugenbehälters angeschraubt werden. Je nach geforderter Leistung werden Elektromotoren mit unterschiedlichen Statorlängen eingesetzt. Bei gleichbleibender Montageposition am Laugenbehälter müssen daher auch die Lagerschilde hinsichtlich ihrer Fixierarme angepasst werden.

Es ist daher Aufgabe der vorliegenden Erfindung, die konstruktive Ausgestaltung eines Elektromotors, insbesondere eines bürstenlosen Elektromotors, zu vereinfachen und kostengünstig zu gestalten.

Unter einem Haushaltsgerät wird ein Gerät verstanden, das zur Haushaltsführung eingesetzt wird. Das kann ein Haushaltsgroßgerät sein, wie beispielsweise eine Waschmaschine, ein Wäschetrockner, eine Geschirrspülmaschine, ein Gargerät, eine Dunstabzugshaube oder ein Kältegerät. Das kann aber auch ein Haushaltskleingerät sein, wie beispielsweise ein Warmwasserbereiter, ein Kaffeevollautomat, eine Küchenmaschine oder ein Staubsauger.

Unter Elektromotor wird insbesondere ein bürstenloser Elektromotor verstanden, wie beispielsweise ein bürstenloser Gleichstrommotor. Ein solcher Elektromotor kann insbesondere als Antrieb in einem Haushaltsgerät eingesetzt werden. Unter einem gehäuselosen Elektromotor wird ein Elektromotor verstanden, dessen Stator keine Ummantelung in Form eines Gehäuses aufweist. Auf diese Weise kann der Stator an die Umgebungsluft Wärme abgeben.

Die Aufgabe wird durch einen Elektromotor gelöst, welcher die Merkmale nach Anspruch 1 aufweist.

Bei einem gehäuselosen Elektromotor, insbesondere bürstenlosen Elektromotor, mit einem Rotor, einem ein Statorblechpaket aufweisenden Stator und stirnseitig an dem Statorblechpaket befestigten A-seitigem Lagerschild (auch antriebsseitiges Lagerschild genannt) und B-seitigem Lagerschild (auch anschlussseitiges Lagerschild genannt), sind erfindungsgemäß das A-seitige Lagerschild und das B-seitige Lagerschild in ihren Ausmaßen und ihrer Formgebung gleich ausgebildet. Diese beiden Lagerschilde sind als Gleichteile ausgebildet, das heißt das A-seitige Lagerschild und das B-seitige Lagerschild weisen in ihrer konstruktiven Ausgestaltung eine identische Ausbildung auf.

Durch diese gleiche Ausbildung der beiden Lagerschilde kann die Konstruktion wesentlich vereinfacht werden. Darüber hinaus wird auch die Montage vereinfacht und insbesondere die Fixierung und die Positionierung der Komponenten zueinander kann mit einfacheren Mitteln erreicht werden. Des weiteren verringern sich die Lagerhaltungskosten und die Logistikkosten, wenn identische Lagerschilde verwendet werden können. Darüber hinaus ist der Konstruktionsaufwand für verschiedenste Lagerschilde nicht mehr erforderlich.

Vorzugsweise sind die Lagerschilde aus einem Blech, insbesondere einem Metallblech, ausgebildet. Besonders bevorzugt erweist es sich, wenn diese aus Blech ausgebildeten Lagerschilde eine Wandstärke kleiner 3 mm, insbesondere zwischen 2 mm und 2, 5 mm, aufweisen. Durch diese Ausgestaltung der Wandstärken können somit Lagerschilde geschaffen werden, welche einerseits mechanisch sehr stabil sind andererseits jedoch auch mit möglichst wenig Material ausgebildet werden können. Neben einer Gewichtseinsparung kann dadurch auch eine Kosteneinsparung erreicht werden. Ein zusätzlicher Vorteil besteht darin, dass die Ableitung der Motorwärme durch das Metallblech gewährleistet ist.

Vorteilhafterweise ist das Blech ein Doppelblech oder ein Multiblech. Durch die Ausbildung des Blechs als Verbund aus zwei oder mehreren Blechlagen, eventuell auch aus verschiedenen Metallen, kann auch bei geringen Blechdicken eine hohe Stabilität der Lagerschilde erzielt werden.

Vorzugsweise sind die Lagerschilde als Pressteile ausgebildet. Diese Herstellung ermöglicht ein relativ einfaches Fertigungsverfahren und eine stabile Ausgestaltung der Lagerschilde.

Zudem sind die beiden Lagerschilde jeweils in Form einer Haube ausgebildet. Diese Haube deckt die Statorwicklungen ab und schützt sie somit gegen Verunreinigungen. An ihrer höchsten Stelle ist die Haube mit einer zentrale Aussparung zur Durchführung der Rotorwelle versehen. Zusätzlich weisen die beiden Lagerschilde jeweils eine Nabe als Sitz für je ein Wellenlager des Rotors auf. Diese Nabe ist vorzugsweise als Hohlzylinder ausgebildet, wobei die Nabe einen geringeren Durchmesser aufweist als die Haube.

Ferner weisen die Lagerschilde jeweils einen umlaufenden Flansch auf, mit dem die Lagerschilde jeweils stirnseitig auf dem Statorblechpaket aufliegen. Dabei endet die Haube in dem umlaufenden Flansch. Auf diese Weise können die Statorwicklungen durch die Lagerschilde besonders gut gegen Verunreinigungen geschützt werden, da die Lagerschilde mit ihrem umlaufenden Flansch dicht an der Stirnseite des Statorblechpakets anliegen. Zusätzlich können an dem Flansch Befestigungsmittel vorgesehen sein, um das Lagerschild an dem Statorblechpaket zu montieren.

Zudem sind an den beiden Lagerschilden Versteifungselemente ausgebildet. Dadurch kann die gesamte mechanische Ausgestaltung des Lagerschilds stabilisiert werden. Vorzugsweise sind die Versteifungselemente, insbesondere in Form von Rippen, an den beiden Lagerschilden nach außen gewölbt ausgebildet. Diese Form der Versteifungselemente kann auf einfache Weise bei dem Umformprozess des Blechs in das Lagerschild mit ausgeformt werden.

Außerdem sind außenseitig an den beiden Lagerschilden am Übergang zwischen der Haube und dem Flansch Versteifungselemente, insbesondere in Form von Rippen, ausgebildet. Gerade an diesem Übergang ist eine Versteifung des Lagerschilds besonders vorteilhaft.

Vorzugsweise ist an der Nabe ein Sensor, insbesondere ein Drehzahlsensor oder ein Sensor zur Positionserkennung des Rotors, angeordnet. Die Nabe bietet eine besonders vorteilhafte Position für die Anbringung eines Sensor, wodurch einerseits die gewünschten Signale besonders gut detektiert werden können und andererseits eine sehr kompakte und bauraumminimierte Anbringung eines Sensors ermöglicht werden kann.

Vorteilhafterweise sind die beiden Lagerschilde mit der Nabe jeweils einstückig ausgebildet. Insbesondere ist die Nabe in die Haube integriert und somit einstückig mit der Haube ausgebildet. Gerade dann, wenn das Lagerschild mit einer derartig integrierten Nabe als Pressteil hergestellt ist, kann dies sehr einfach und dennoch exakt erfolgen. Toleranzen bei der Verbindung der beiden Teile können daher vermieden werden. Darüber hinaus ist kein zusätzlicher Montageaufwand zur Anbringung der Nabe an der Haube erforderlich.

In einer alternativen Ausführungsform ist die Nabe als separates Teil ausgebildet und an der Haube montiert, insbesondere angenietet. Eine derartige Ausgestaltung einer festen Verbindung zwischen zwei separaten Teilen wird im vorliegenden Kontext nicht als einstückige Ausbildung verstanden. Auf diese Weise kann die Nabe und damit der Sitz des Wellenlagers in Form eines aus Metall gebohrten oder gedrehten Werkstücks gefertigt werden, welches mit dem aus Blech geformten Lagerschild verbunden wird

Der Elektromotor kann eine Motorhalterung aufweisen, wobei die Motorhalterung Befestigungselemente zur Befestigung des Elektromotors in oder an einem Haushaltsgerät aufweist. Diese Motorhalterung ist vorzugsweise an dem Statorblechpaket befestigt.

Auf diese Weise ist die Motorhalterung von den Lagerschilden unabhängig. Das heißt es können auch bei unterschiedlichen Einbausituationen die gleichen Lagerschilde verwendet werden. Eine Anpassung des Elektromotors an die unterschiedlichen Einbausituationen kann allein durch die Motorhalterung erfolgen. Insbesondere können dadurch das A-seitige Lagerschild und das B-seitige Lagerschild gleich ausgebildet werden.

Vorzugsweise ist die Motorhalterung an dem Statorblechpaket durch Formschluss und/oder Kraftschluss befestigt. Insbesondere ist die Motorhalterung an dem Statorblechpaket durch zumindest eine Nut-Feder-Verbindung oder zumindest eine Schwalbenschwanzverbindung befestigt. Dadurch kann der Zusammenbau des Elektromotors mit der zugehörigen Motorhalterung auf besonders einfache und kostengünstige Weise erfolgen. Insbesondere kann die Verbindung zwischen Statorblechpaket und dem Trägerteil ohne zusätzliche Schrauben, Nieten oder sonstigen durch eine Montage separat anzubringenden Elementen erfolgen. Separate Befestigungsteile können somit vorzugsweise entfallen, so dass die Bauteilzahl des Elektromotors deutlich reduziert werden kann. Nicht zuletzt kann dadurch auch der Montageaufwand deutlich gesenkt werden.

Bevorzugt weist die Motorhalterung zumindest ein Verbindungsteil und das Statorblechpaket zumindest eine entsprechende Aufnahme für das Verbindungsteil auf. Insbesondere ist die Aufnahme als Vertiefung an der Außenseite des Statorblechpakets ausgebildet und das Verbindungsteil greift in die Vertiefung ein. Das heißt das Statorblechpaket weist an der der Motorhalterung zugewandten Seite eine oder mehrere Aufnahmen auf, in welche das Verbindungsteil oder die Verbindungsteile eingesetzt werden können. Insbesondere sind das Verbindungsteil und die Aufnahme so konzipiert, dass ein Einschieben bzw. auch ein Einstecken des Verbindungsteils in die Aufnahme gewährleistet werden kann. Gerade diese Verbindungsausgestaltung ist besonders zuverlässig und sicher und erfordert darüber hinaus keine weiteren separaten Verbindungselemente mehr. Durch diese Ausgestaltung kann die Bauteilanzahl des Elektromotors deutlich reduziert werden. Ein einfaches Stecksystem zwischen dem Verbindungsteil und der Aufnahme kann dadurch realisiert sein.

Vorzugsweise sind zumindest zwei längliche Verbindungsteile ausgebildet, welche parallel zueinander angeordnet sind. Gerade bei einem Einschieben kann durch diese Mehrzahl von Verbindungsteilen ein Stecksystem realisiert werden, welches eine stabile Verbindung der Motorhalterung mit dem Statorblechpaket ermöglicht. Vorteilhaft ist es auch mehrere Montagemöglichkeiten der Motorhalterung an dem Statorblechpaket vorzusehen. Das heißt, dass Aufnahmen für das Verbindungsteil bzw. für die Verbindungsteile an verschiedenen Seiten des Statorblechpakets ausgebildet sind. Je nach Einbausituation kann somit die Motorhalterung an verschiedenen Seiten des Statorblechpakets angebracht werden.

Vorzugsweise erstreckt sich die Aufnahme in axialer Richtung entlang des Statorblechpakets, insbesondere über die gesamte Länge des Statorblechpakets. Entsprechend ist das Verbindungsteil als länglicher Stege ausgebildet, wobei insbesondere vorgesehen ist, dass die Länge des Verbindungsteils maximal der Länge des Statorblechpakets entspricht. Durch diese Ausgestaltung kann einerseits eine einfache Verbindung gewährleistet und darüber hinaus ein möglichst kompakter Aufbau im zusammengesetzten Zustand des Elektromotors erreicht werden. Nicht erforderliche oder überstehende Teile können dadurch verhindert werden.

Gemäß einer bevorzugten Ausführungsform weist die Aufnahme zumindest eine Hinterschneidung senkrecht zur Erstreckungsrichtung der Aufnahme auf, und das Verbindungsteil füllt die Aufnahme formschlüssig aus. Dadurch ist das Verbindungsteil und damit die Motorhalterung senkrecht zur Erstreckungsrichtung der Aufnahme bzw. des Verbindungsteils an dem Statorblechpaket fixiert. Es besteht lediglich ein Verschiebungsfreiheitsgrad des Verbindungsteils in der Aufnahme längs der Erstreckungsrichtung.

Vorzugsweise ist das Verbindungsteil in Erstreckungsrichtung durch ein stirnseitig an dem Statorblechpaket befestigtes Lagerschild, insbesondere durch einen Flansch des Lagerschilds, fixiert. Es kann anstelle des Lagerschilds auch ein anderes Motorbauteil verwendet werden, um das Verbindungsteil bezüglich seines Verschiebungsfreiheitsgrades in Erstreckungsrichtung des Verbindungsteils bzw. der Aufnahme zu fixieren, wie beispielsweise eine Statorendplatte. Durch die Verwendung des Lagerschilds bzw. der beiden Lagerschilde auf beiden Stirnseiten des Statorblechpakets, also des A-seitigen und des B-seitigen Lagerschilds, zur Fixierung des Verbindungsteils kann eine besonders kostengünstige Befestigung der Motorhalterung an dem Statorblechpaket realisiert werden. Es werden keine zusätzlichen Bauteile benötigt und die Motorhalterung kann beim Zusammenbau des Elektromotors durch lediglich einen zusätzlichen Montageschritt an dem Statorblechpaket angebracht werden.

Vorzugsweise weist die Motorhalterung eine Trägerplatte auf, mit der die Motorhalterung flächig an dem Statorblechpaket anliegt, und das Verbindungsteil ist an der Trägerplatte, insbesondere einstückig mit der Trägerplatte, ausgebildet. Durch diese Ausgestaltung kann die mechanische Stabilität im zusammengesetzten Zustand nochmals erhöht werden, da durch die Anlage der Trägerplatte an dem Statorblechpaket ein Durchbiegen der Trägerplatte verhindert wird. Vorzugsweise ist das Verbindungsteil auf der Trägerplatte angeordnet. Insbesondere sind die Lagerschilde mit ihren jeweiligen Flanschen mit Ausmaßen ausgebildet, die im zusammengesetzten Zustand des Elektromotors ermöglichen, dass die Flansche der Lagerschilde an der Trägerplatte anliegen. Dadurch dient die Trägerplatte als Anschlag für die Flansche, so dass Verbindungsteil in axialer Richtung positionsstabil gehalten werden kann.

Durch diesen Anschlag bzw. durch dieses Anliegen der Flansche an der Trägerplatte wird eine Stütze in axialer Richtung erreicht. Vorzugsweise weist die Trägerplatte die gleiche Länge wie die Verbindungsteile auf. Insbesondere ist vorgesehen, dass die Trägerplatte die gleiche Länge wie das Verbindungsteil aufweist und darüber hinaus insbesondere die gleiche Länge wie das Statorblechpaket aufweist.

Bevorzugt ist die Motorhalterung in Form eines H-förmigen Trägerteils ausgebildet, bei dem die Trägerplatte zwei parallele Schenkel des Trägerteils verbindet. Insbesondere weist das Trägerteil an jedem Ende seiner zwei Schenkel ein Befestigungselement, insbesondere in Form einer Befestigungsöse, auf. Dadurch kann die Motorhalterung in ihren Abmessungen durch Wahl der Länge und des Abstands ihrer Schenkel auf einfachste Weise an verschiedene Einbausituationen angepasst werden. Zusätzlich kann dadurch eine einfache Montage mit guter Zugänglichkeit zu den Befestigungselementen gewährleistet werden. Durch die Ausbildung der Befestigungselemente als Befestigungsösen, das heißt als ringförmige Durchführungen, kann der Einbau des Elektromotors besonders einfach durch Hindurchstecken oder Hindurchführen von Verbindungskomponenten, wie beispielsweise Schrauben oder Nieten erfolgen.

Bevorzugt weist das Trägerteil zwischen seinen zwei Schenkeln ein Versteifungsteil auf. Dadurch kann auch bei großen Längen der Schenkel eine Stabilisierung erreicht werden, so dass Schwingungen der Motorhalterung und damit des Elektromotors bei Betrieb des Elektromotors vermieden oder zumindest verringert werden.

Vorzugsweise ist die Motorhalterung strukturiert, insbesondere mit einer wabenförmigen Struktur, ausgebildet. Dies gilt insbesondere auch für das Versteifungsteil. Dadurch kann eine Stabilisierung der Motorhalterung und insbesondere der beiden Schenkel der Motorhalterung mit möglichst geringem Materialeinsatz erzielt werden. Dies macht sich auch in einem geringen Gewicht der Motorhalterung bemerkbar. Anstelle einer wabeförmigen Struktur kann auch eine andere Struktur vorgesehen sein, wie beispielsweise ein Gitter oder eine Struktur, die eine Vielzahl von Löchern oder Sacklöchern aufweist.

Gemäß einer bevorzugten Ausführungsform ist die Motorhalterung einstückig ausgebildet. Insbesondere ist das Verbindungsteil einstückig mit der Motorhalterung bzw. der Trägerplatte ausgebildet. In diesem Zusammenhang kann vorgesehen sein, dass die Motorhalterung aus Kunststoff ausgebildet ist. Bei einer Realisierung als Spritzgussteil kann damit eine sehr einfache und aufwandswarme Fertigung gewährleistet werden. Nicht zuletzt können die der Motorhalterung zugeordneten Funktionen und die damit erforderlichen Teile durch eine derartige einstückige Ausgestaltung positionsexakt und dauerhaft gefertigt werden. Auch hier kann somit ein weiterer Montageaufwand entfallen, wodurch auch eine erhebliche Kostenreduzierung erreicht werden kann.

Der erfindungsgemäße Elektromotor kann als Antrieb in einem Haushaltsgerät eingesetzt werden. Insbesondere kann er als Antriebsmotor für eine Wäschetrommel in einem Haushaltsgerät zur Pflege von Wäschestücken dienen, wie beispielsweise einer Waschmaschine, einem Wäschetrockner oder einem Waschtrockner. Der Elektromotor kann mit seiner Motorhalterung an einer Komponente des Haushaltsgerätes montiert sein, wie beispielsweise einem Laugenbehälter bei einer Waschmaschine oder einem Waschtrockner.

Die Erfindung wird nachfolgend anhand schematischer Zeichnungen näher erläutert. Es zeigen:
- Fig. 1: eine Explosionsdarstellung einer erfindungsgemäßen Elektromotors mit zwei Lagerschilden und einer Motorhalterung;
- Fig. 2a und 2b: perspektivische Darstellungen der Motorhalterung gemäß Figur 1;
- Fig. 3a und 3b: perspektivische Darstellungen eines Lagerschilds für den Elektromotor gemäß einer ersten Ausführungsform;
- Fig. 4: eine Explosionsdarstellung eines Lagerschilds für den Elektromotor gemäß einer zweiten Ausführungsform;
- Fig. 5a und 5b: perspektivische Darstellungen eines zusammengesetzten Zustands des Lagerschilds gemäß Fig. 4;
- Fig. 6: eine perspektivische Darstellung eines zusammengesetzten Zustands der Komponenten des Elektromotors gemäß Figur 1;
- Fig. 7: eine perspektivische Darstellung des an einer Komponente eines Haushaltsgeräts montierten Elektromotors gemäß Figur 6.

In den Figuren werden gleiche und funktionsgleiche Elemente mit den gleichen Bezugszeichen versehen.

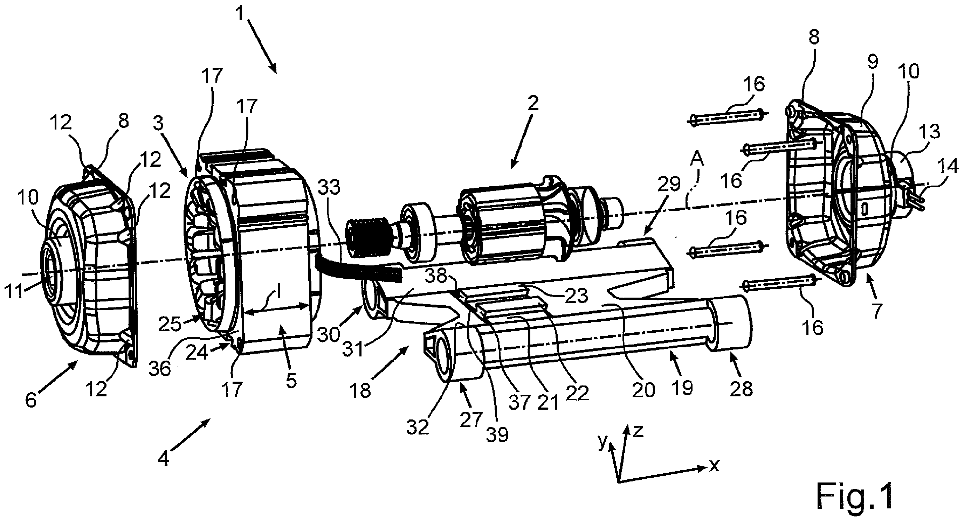

In Fig. 1 ist in einer perspektivischen Explosionsdarstellung ein bürstenloser Elektromotor 1 gezeigt, welcher einen Rotor 2 und einen Stator 4 aufweist. Der Stator 4 setzt sich aus einem Statorblechpaket 5 und zugehörigen Statorwicklungen 3 zusammen. Die Statorwicklungen 3 werden über Anschlussleitungen 33 mit Spannung versorgt. Das Statorblechpaket 5 ist stirnseitig in axialer Richtung A durch zwei Lagerschilde 6 und 7 abgedeckt. Diese Lagerschilde 6 und 7 werden zum einen als A-seitiges Lagerschild 6 (auch antriebseitiges Lagerschild genannt) und als B-seitiges Lagerschild 7 (auch anschlussseitiges Lagerschild genannt) bezeichnet.

Die beiden Lagerschilde 6 und 7 sind als Gleichteile ausgebildet, das heißt sie sind in ihren Ausmaßen und ihrer Formgebung identisch ausgebildet. Die beiden Lagerschilde 6 und 7 sind jeweils als einstückige Blechteile realisiert und können durch Pressen oder durch Tiefziehen aus einem Blech umgeformt sein. Die Wandstärke dieses Blechmaterials beträgt zwischen 2 mm und 2,5 mm, so dass die Lagerschilde 6 und 7 relativ dünn im Hinblick auf die Materialstärke des Blechs ausgebildet werden können. Insbesondere können die beiden Lagerschilde 6 und 7 aus Doppelblech oder Multiblech hergestellt sein. Durch die Gleichteilbildung der Lagerschilde 6 und 7 kann der Konstruktions- und Montageaufwand des Elektromotors 1 wesentlich reduziert werden.

Beide Lagerschilde 6, 7 sind jeweils in Form einer Haube 9 ausgebildet, die in einem umlaufenden Flansch 8 endet. Die Haube 9 ist im Wesentlichen geschlossen ausgebildet, das heißt bis auf die zentral angeordnete Öffnung zur Durchführung der Rotorwelle, und deckt im montierten Zustand die Statorwicklungen 3 ab. Lediglich für die Durchführung der Anschlussleitungen 33 ist noch eine Öffnung in der Haube 9 vorgesehen. Mit dem Flansch 8 liegen die Lagerschilde 6, 7 jeweils auf der zugehörigen Stirnseite des Statorblechpakets 5 auf. Am Übergang zwischen der Haube 9 und dem Flansch 8 sind Versteifungselemente 12 in Form von Rippen ausgebildet, durch welche die mechanische Stabilität des Lagerschilds 6 bzw. 7 gerade an diesem Übergang wesentlich verbessert werden kann. Bei dem Herstellungsprozess der Lagerschilde 6, 7 kann jeweils eine Nabe 10 einstückig mit angeformt sein. Diese Nabe 10 dient als Sitz 11 für ein Wellenlager, durch welches die Welle des Rotors 2 drehbar gelagert wird.

Bei dem B-seitigen Lagerschild 7 kann (wie in Fig. 1 gezeigt) an der Nabe 10 ein Sensor 13 montiert sein, dessen Signalleitungen 14 ebenfalls zu erkennen sind. Dieser Sensor 13 kann beispielsweise ein Drehzahlsensor oder ein Sensor zur Positionserkennung des Rotors 2 sein.

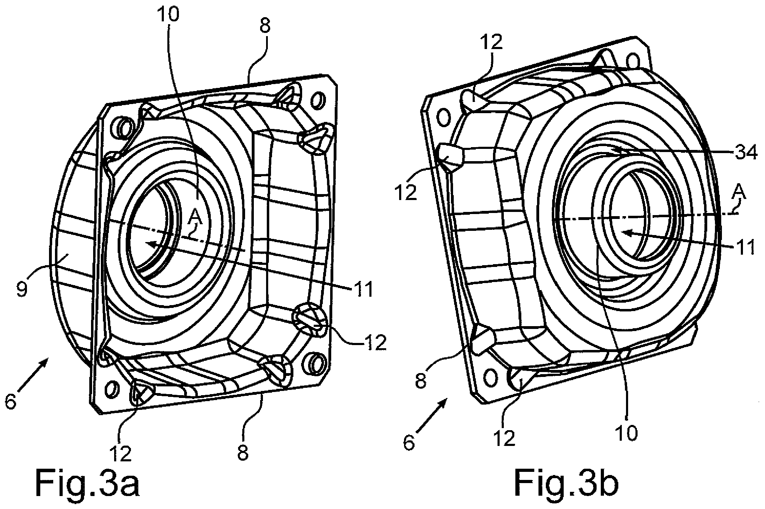

In den Fig. 3a und 3b sind verschiedene Ansichten des A-seitigen Lagerschilds 6 gezeigt, wobei in diesem Zusammenhang nochmals erwähnt werden soll, dass das B-seitige Lagerschild 7 identisch zu dem A-seitigen Lagerschild 6 ausgebildet ist.

In Fig. 3a ist sowohl die Hohlstruktur der Haube 9 als auch die Hohlstruktur der Nabe 10 zu erkennen. Die Haube 9 und die Nabe 10 sind koaxial zueinander angeordnet, wobei die Nabe 10 in einer Senke der Haube 9 angeordnet ist. Dennoch erstreckt sich die Nabe 10 über die Oberseite der Haube 9 hinaus, wie dies auch neben der Darstellung in Fig. 1 in Fig. 3b zu erkennen ist. Die Senke ist insbesondere in der Fig. 3b zu erkennen und mit dem Bezugszeichen 34 gekennzeichnet. In diesem Zusammenhang ist auch zu erkennen, dass das Innenmaß (Innendurchmesser) der Senke 34 um soviel größer ist als das Außenmaß der hohlzylinderförmigen Nabe 10, dass diesbezüglich ein Abstand und somit quasi ein umlaufender Graben ausgebildet ist, bei dem die Innenwand der Senke 34 der Haube 9 und die Außenwand der Nabe 10 berührungslos und beabstandet zueinander angeordnet sind.

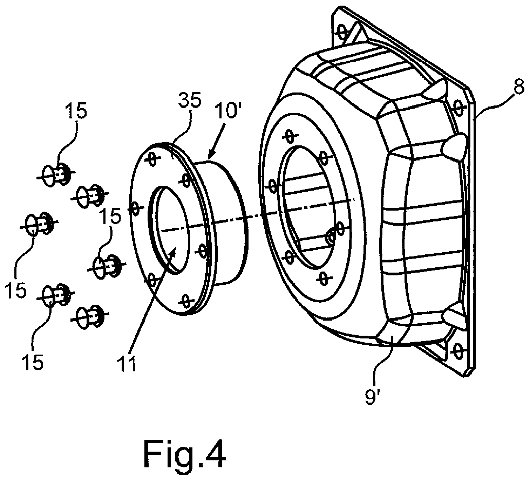

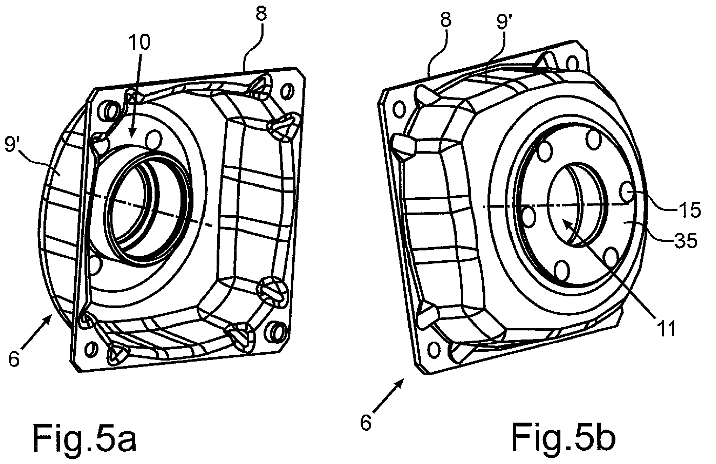

In der gezeigten Ausführung gemäß Fig. 1 sind die Naben 10 integral mit der Haube 9 bei den Lagerschilden 6 und 7 ausgebildet. Es kann auch vorgesehen sein, dass diese Nabe 10 jeweils als separates Teil ausgebildet ist und an der Haube 9 des Lagerschilds 6, 7 zentral montiert wird. In dem Zusammenhang sei auf die Darstellung in Fig. 4, 5a und 5b verwiesen. Dort ist im Unterschied zur einstückigen Ausgestaltung der Lagerschilde 6 und 7 gemäß Fig. 1 und auch Fig. 3a und 3b die Nabe 10' mit Nietelementen 15 mit der Haube 9' verbunden. Auf diese Weise kann die Nabe 10' und damit der Sitz 11 des Wellenlagers in Form eines aus Metall gebohrten oder gedrehten Werkstücks gefertigt werden, welches mit dem aus Blech geformten Lagerschild 6 bzw. 7 verbunden wird.

Die beiden Lagerschilde 6 und 7 sind durch Stiftelemente 16 gemäß der Darstellung in Fig. 1, welche auch als Nietstifte ausgebildet sein können, verbunden. In diesem Zusammenhang erstrecken sich die Stifte 16 auch durch die in Fig. 1 zu erkennenden Durchführungen 17 im Statorblechpaket 5.

Bei der Ausführung gemäß Fig. 4 ist die Nabe 10' so orientiert, dass sich diese mit einem hohlzylinderförmigen Teil in das Innere der Haube 9' und somit in deren Hohlraum erstreckt. Ein Flansch 35 der Nabe 10' liegt demgegenüber auf der Oberseite der Haube 9' auf und wird über die genannten Nietelemente 15 dort befestigt.

In den Fig. 5a und 5b sind Ansichten einerseits von innen und andererseits von außen der Lagerschilde 6 und 7 gemäß der Realisierung in Fig. 4 gezeigt. Auch bei einer derartigen Realisierung sind die Lagerschilde 6 und 7 identisch ausgebildet.

In der Explosionsdarstellung gemäß Fig. 1 ist des Weiteren eine Motorhalterung 18 zu erkennen, mittels welcher der Elektromotor 1 an einem Haushaltsgerät befestigt werden kann. Vorzugsweise ist in diesem Zusammenhang vorgesehen, dass der Elektromotor 1 in einer Waschmaschine, einem Wäschetrockner oder einem Waschtrockner angeordnet ist und zum Antrieb einer Wäschetrommel vorgesehen ist.

Die Motorhalterung 18 ist in Form eines plattenförmigen Trägerteils 19 einstückig aus Kunststoff ausgebildet. Das Trägerteil 19 ist H-förmig konzipiert und weist zwei parallele Schenkel 31, 32 auf, die miteinander durch eine rechtwinklig zu ihnen angeordnete Trägerplatte 21 verbunden sind. Des weiteren weist das Trägerteil 19 zwischen seinen beiden Schenkeln 31, 32 ein Versteifungsteil 20 auf. Die Trägerplatte 21 kann auf dem Versteifungsteil 20 ausgebildet sein bzw. kann auch Teil des Versteifungsteils 20 sein. Insbesondere ist das Versteifungsteil 20 mit der Trägerplatte 21 einstückig ausgebildet. Die Trägerplatte 21 ist erhaben über die Oberfläche des Versteifungsteils 20 nach oben hin realisiert und somit dem Statorblechpaket 5 zugewandt. Auf der Trägerplatte 21 sind im Ausführungsbeispiel zwei längliche Verbindungsteile 22 und 23 ausgebildet, welche als längliche Stege konzipiert sind. Die Länge der Verbindungsteile 22 und 23 in x-Richtung entspricht im Ausführungsbeispiel genau der Länge (Erstreckung in x-Richtung) der Trägerplatte 21. Die Verbindungsteile 22 und 23 sind parallel und beabstandet zueinander angeordnet und im Querschnitt (Schnittebene in der y-z-Ebene) zum Podest 21 hin verjüngt ausgebildet.

Das Statorblechpaket 5 weist Aufnahmen 24 und 25 in Form von Vertiefungen auf, in welche die Verbindungsteile 22 und 23 beim Zusammensetzen bzw. beim Anbringen des Elektromotors 1 am Trägerteil 19 eingeschoben werden. Die Aufnahmen 24 und 25 sind so konzipiert, dass die Verbindungsteile 22 und 23 passgenau einführbar sind. Die Aufnahmen 24 und 25 bilden mit den Verbindungsteilen 22 und 23 Schwalbenschwanzverbindungen.

In diesem Zusammenhang ist im Ausführungsbeispiel vorgesehen, dass die Länge I des Statorblechpakets 5 der Länge der Trägerplatte 21 und auch der Länge der Verbindungsteile 22 und 23 entspricht. Die Verbindungsteile 22 und 23 erstrecken sich somit in Längsrichtung und somit in axialer Richtung A nicht über die Ausmaße der Aufnahmen 24 und 25 hinaus.

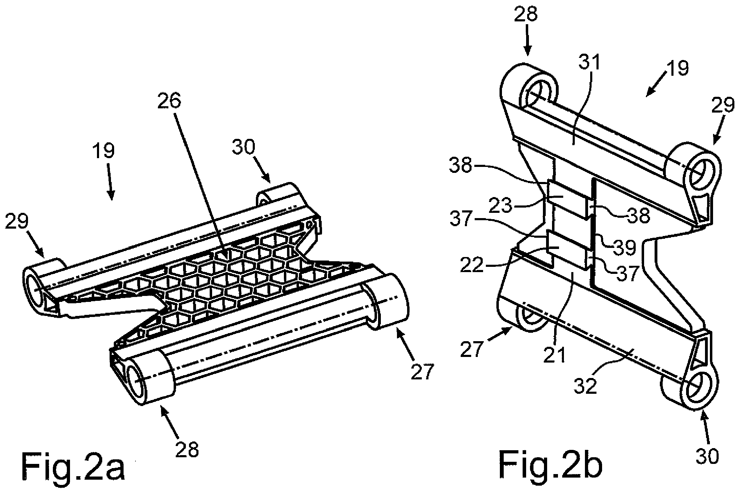

In der gezeigten Ausführung gemäß Fig. 1 ist das Versteifungsteil 20 des Trägerteils 19 massiv ausgebildet. Vorzugsweise ist vorgesehen, dass dieses Versteifungsteil 20 strukturiert ausgebildet wird. Besonders bevorzugt erweist es sich, wenn dieses Versteifungsteil 20 eine wabenförmige Struktur 26 gemäß der Darstellung in Fig. 2a aufweist. Diese wabenförmige Struktur 26 kann beidseits offen ausgebildet sein, wobei vorzugsweise vorgesehen ist, dass das Versteifungsteil 20 an der Seite, an der die Trägerplatte 21 und die Verbindungsteile 22 und 23 ausgebildet sind, geschlossen ist. Auf dieser Seite ist gemäß der Darstellung in Fig. 2b somit die wabenförmige Struktur 26 des Versteifungsteils 20 abgedeckt. Die wabenförmige Struktur 26 kann sich über die gesamte Fläche des Versteifungsteils 20 erstrecken. Dies ist beispielsweise in der Darstellung gemäß Fig. 2a gezeigt. Anstatt der wabenförmigen Struktur 26 kann auch eine gitterförmige oder gelochte Struktur vorgesehen werden. Wesentlich ist der Effekt der Versteifung der Motorhalterung 18 bei geringem Materialaufwand.

An jedem Ende der beiden Schenkel 31, 32 des H-förmigen Trägerteils 19 sind Befestigungselemente in Form von Befestigungsösen 27, 28, 29 und 30 ausgebildet. Das heißt die Befestigungselemente sind als ringförmige Durchführungen ausgebildet, durch die beispielsweise Schrauben oder Nieten geführt werden können.

Die Motorhalterung 18 wird an dem Statorblechpaket 5 bei dem Zusammenbau des Elektromotors 1 montiert. Dabei werden die Verbindungsteile 22 und 23 in die Aufnahmen 24 und 25 des Statorblechpakets 5 geschoben. Durch die Schwalbenschwanzverbindung zwischen den Verbindungsteilen 22, 23 und den Aufnahmen 24, 25 ist die Motorhalterung 18 formschlüssig an dem Statorblechpaket 5 gehalten. Lediglich in Erstreckungsrichtung der Aufnahmen 24, 25 bzw. der Verbindungsteile 22, 23 besteht noch ein Verschiebungsfreiheitsgrad. Durch stirnseitige Befestigung der Lagerschilde 6 und 7 an dem Statorblechpaket 5 wird die Motorhalterung 18 auch hinsichtlich dieses verbleibenden Verschiebungsfreiheitsgrades fixiert. Gemäß der gezeigten Ausführungsform liegen die Flansche 8 der Lagerschilde 6 und 7 einerseits stirnseitig an dem Statorblechpaket 5 und andererseits nach außen frei liegenden Stirnflächen 37 und 38 der Verbindungsteile 22 und 23 sowie der Trägerplatte 21 an. In diesem Zusammenhang dient die Trägerplatte 21 als beidseitiger Anschlag für die Flansche 8. Auf diese Weise ist eine Positionsfixierung der Motorhalterung 18 an dem Statorblechpaket 5 gewährleistet, ohne dass zusätzliche separate Verbindungsteile, wie Schrauben, Nieten oder dergleichen, verwendet werden müssen.

In Fig. 2a ist eine Ansicht von unten des Trägerteils 19 gezeigt, wobei in diesem Zusammenhang die bereits angesprochene wabenartige Struktur 26 zu erkennen ist.

In Fig. 2b ist eine perspektivische Darstellung des Trägerteils 19 mit einer Draufsicht und somit einer dem Statorblechpaket 5 zugewandten Seite gezeigt, wobei in diesem Zusammenhang die Bedeckung der darunter liegenden wabenförmigen Struktur 26 zu erkennen ist.

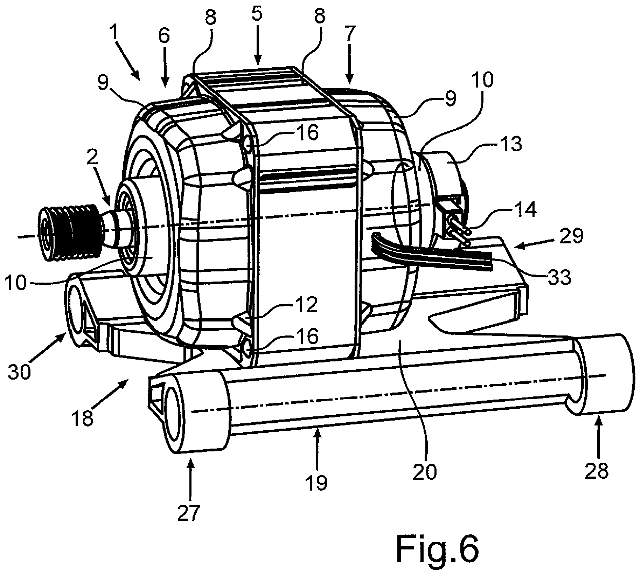

In Fig. 6 ist ein zusammengesetzter Zustand des Elektromotors 1 mit der an dem Statorblechpaket 5 befestigten Motorhalterung 18 gezeigt. In diesem Zusammenhang sei darauf hingewiesen, dass die Innenseite und somit die der Haube 9 abgewandte Seite des Flansches 8 des A-seitigen Lagerschilds 6 an der Oberfläche 36 (Fig.1) des Statorblechpakets 5 anliegt. In entsprechender Weise gilt dies auch für den Flansch 8 des B-seitigen Lagerschilds 7, welcher an der gegenüberliegenden zugewandten Seite des Statorblechpakets 5 anliegt.

Darüber hinaus liegt die Innenseite des Flansches 8 des A-seitigen Lagerschilds 6 auch an der Stirnseite 37 des Verbindungsteils 22 als auch an der Stirnseite 38 des Verbindungsteils 23 an. Des Weiteren liegt diese Innenseite des Flansches 8 des A-seitigen Lagerschilds 6 an einer Stirnseite 39 der Trägerplatte 21 an. In entsprechender Weise liegt auch die Innenseite des Flansches 8 des B-seitigen Lagerschilds 7 an den gegenüberliegenden nicht näher gekennzeichneten Stirnseiten der Verbindungsteile 22 und 23 und der gegenüberliegenden Stirnseite der Trägherplatte 21 an. Der in Fig. 6 gezeigte zusammengesetzte Zustand des Elektromotors 1 wird über die Stifte 16 gewährleistet. Durch diese mechanisch sehr vorteilhafte Anbringung und Ausgestaltung der geometrischen Teile kann im in Fig. 6 gezeigten zusammengesetzten Zustand eine hohe mechanische Stabilität gewährleistet werden ohne dass zusätzliche separate Montageelemente vorgesehen werden müssen. Dies wird insbesondere auch durch die gleiche Ausbildung der Lagerschilde 6 und 7 ermöglicht.

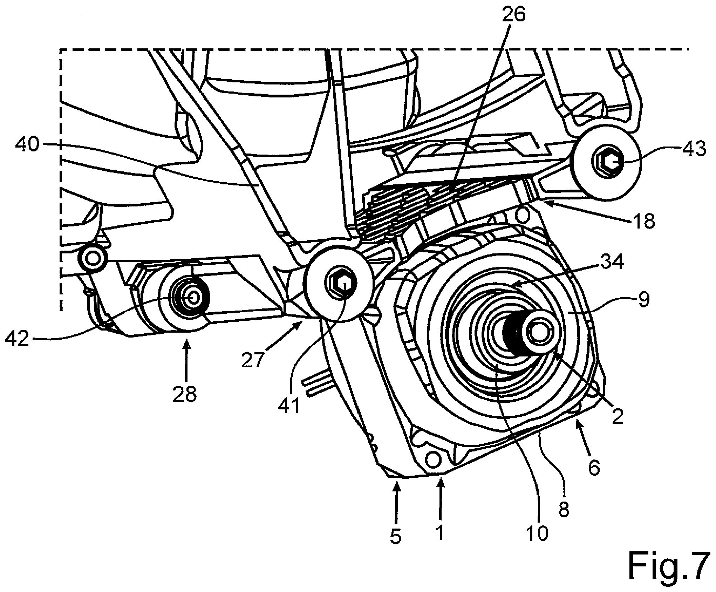

In Fig. 7 ist eine perspektivische Darstellung des an einer Komponente 40 eines Haushaltsgeräts montierten Elektromotors 1 gezeigt. In diesem Zusammenhang sind vier Schrauben vorgesehen von denen drei Stück in Figur 7 gezeigt sind, die 41, 42 und 43, welche durch die Verbindungsösen 27, 28, 29 und 30 hindurchragen und eine Montage an der Komponente 40 ermöglichen.

## Patentansprüche

1. Gehäuseloser Elektromotor, insbesondere bürstenloser Elektromotor, mit einem Rotor (2), einem ein Statorblechpaket (5) aufweisenden Stator (4) und stirnseitig an dem Statorblechpaket (5) befestigten A-seitigem Lagerschild (6) und B-seitigem Lagerschild (7), wobei die beiden Lagerschilde (6, 7) jeweils in Form einer Haube (9, 9') ausgebildet sind, **dadurch gekennzeichnet, dass** das A-seitige Lagerschild (6) und das B-seitige Lagerschild (7) in ihren Ausmaßen und ihrer Formgebung gleich ausgebildet sind, die Lagerschilde (6, 7) jeweils einen umlaufenden Flansch (8) aufweisen, mit dem die Lagerschilde (6, 7) jeweils stirnseitig auf dem Statorblechpaket (5) aufliegen, die Haube (9, 9') in dem umlaufenden Flansch (8) endet und außenseitig an den beiden Lagerschilden (6, 7) am Übergang zwischen der Haube (9, 9') und dem Flansch (8) Versteifungselemente (12) ausgebildet sind.

2. Elektromotor nach Anspruch 1, **dadurch gekennzeichnet, dass** die beiden Lagerschilde (6, 7) aus einem Blech, insbesondere Metallblech, ausgebildet sind.

3. Elektromotor nach einem der vorhergehenden Ansprüche, **dadurch gekennzeichnet, dass** die beiden Lagerschilde (6, 7) als Pressteile ausgebildet sind.

4. Elektromotor nach einem der vorhergehenden Ansprüche, **dadurch gekennzeichnet, dass** an den beiden Lagerschilden (6, 7) Versteifungselemente (12) ausgebildet sind.

5. Elektromotor nach Anspruch 4, **dadurch gekennzeichnet, dass** die Versteifungselemente (12) an den beiden Lagerschilden (6, 7) nach außen gewölbt ausgebildet sind.

6. Elektromotor nach einem der vorhergehenden Ansprüche, **dadurch gekennzeichnet, dass** die Versteifungselemente (12) in Form von Rippen ausgebildet sind.

7. Elektromotor nach einem der vorhergehenden Ansprüche, **dadurch gekennzeichnet, dass** die beiden Lagerschilde (6, 7) jeweils eine Nabe (10, 10') als Sitz (11) für je ein Wellenlager des Rotors (2) aufweisen.

8. Elektromotor nach Anspruch 7, **dadurch gekennzeichnet, dass** an der Nabe (10, 10') ein Sensor (13), insbesondere ein Drehzahlsensor oder ein Sensor zur Positionserkennung des Rotors, angeordnet ist.

9. Elektromotor nach einem der Ansprüche 7 oder 8, **dadurch gekennzeichnet, dass** die beiden Lagerschilde (6, 7) mit der Nabe (10) jeweils einstückig ausgebildet sind.

10. Elektromotor nach Anspruch 9, **dadurch gekennzeichnet, dass** die Nabe (10) in die Haube (9) integriert ist.

11. Elektromotor nach einem der Ansprüche 7 oder 8, **dadurch gekennzeichnet, dass** die Nabe (10') als separates Teil ausgebildet ist und an der Haube (9') montiert ist, insbesondere angenietet ist.

12. Elektromotor nach Anspruch 11, **dadurch gekennzeichnet, dass** die Nabe (10') ein aus Metall gebohrtes oder gedrehtes Werkstück ist.

13. Haushaltsgerät, insbesondere zur Pflege von Wäschestücken, mit einem Elektromotor (1) nach einem der vorhergehenden Ansprüche.

## Claims

1. Housingless electric motor, in particular brushless electric motor, comprising a rotor (2), a stator (4) having a laminated stator core (5), and an A-side end shield (6) and a B-side end shield (7) face-mounted on the laminated stator core (5), wherein the two end shields (6, 7) are each designed in the form of a cap (9, 9'), **characterised in that** the A-side end shield (6) and the B-side end shield (7) are designed the same in respect of their dimensions and their shape, the end shields (6, 7) each have a circumferential flange (8) with which the end shields (6, 7) butt against the face of the laminated stator core (5) in each case, the cap (9, 9') ends in the circumferential flange (8), and stiffening elements (12) are designed on the outside of the two end shields (6, 7) at the transition between the cap (9, 9') and the flange (8).

2. Electric motor according to claim 1, **characterised in that** the two end shields (6, 7) are designed from a sheet material, in particular a sheet metal material.

3. Electric motor according to one of the preceding claims, **characterised in that** the two end shields (6, 7) are designed as pressed parts.

4. Electric motor according to one of the preceding claims, **characterised in that** stiffening elements (12) are designed on the two end shields (6, 7).

5. Electric motor according to claim 4, **characterised in that** the stiffening elements (12) are designed to curve outwards on the two end shields (6, 7).

6. Electric motor according to one of the preceding claims, **characterised in that** the stiffening elements (12) are designed in the form of ribs.

7. Electric motor according to one of the preceding claims, **characterised in that** the two end shields (6, 7) each have a boss (10, 10') as a seat (11) for a shaft bearing of the rotor (2) in each case.

8. Electric motor according to claim 7, **characterised in that** a sensor (13), in particular a rotational speed sensor or a sensor for detecting the position of the rotor, is arranged on the boss (10, 10').

9. Electric motor according to one of claims 7 or 8, **characterised in that** the two end shields (6, 7) are in each case designed in one piece with the boss (10).

10. Electric motor according to claim 9, **characterised in that** the boss (10) is integrated into the cap (9).

11. Electric motor according to one of claims 7 or 8, **characterised in that** the boss (10') is designed as a separate part and assembled on the cap (9'), in particular riveted on.

12. Electric motor according to claim 11, **characterised in that** the boss (10') is a workpiece bored or turned from metal.

13. Household appliance, in particular for handling laundry items, having an electric motor (1) according to one of the preceding claims.

## Revendications

1. Moteur électrique sans boîtier, en particulier moteur électrique sans balais, comprenant un rotor (2), un stator (4) possédant un empilage de tôles de stator (5) et un flasque de palier du côté A (6) et un flasque de palier du côté B (7) fixés frontalement sur l'empilage de tôles de stator (5), dans lequel les deux flasques de palier (6, 7) sont configurés respectivement sous forme d'un capot (9, 9'), **caractérisé en ce que** le flasque de palier du côté A (6) et le flasque de palier du côté B (7) sont réalisés de façon identique dans leurs dimensions et leur forme, les flasques de palier (6, 7) comprennent respectivement une collerette (8) périphérique, avec laquelle les flasques de palier (6, 7) reposent respectivement frontalement sur l'empilage de tôles de stator (5), le capot (9, 9') se termine dans la collerette périphérique (8) et des éléments raidisseurs (12) sont formés sur le côté extérieur des deux flasques de palier (6, 7) à la jonction entre le capot (9, 9') et la collerette (8).

2. Moteur électrique selon la revendication 1, **caractérisé en ce que** les deux flasques de palier (6, 7) sont formés à partir d'une tôle, en particulier d'une tôle métallique.

3. Moteur électrique selon l'une des revendications précédentes, **caractérisé en ce que** les deux flasques de palier (6, 7) sont réalisés sous forme de pièces embouties.

4. Moteur électrique selon l'une des revendications précédentes, **caractérisé en ce que** des éléments raidisseurs (12) sont formés sur les deux flasques de palier (6, 7).

5. Moteur électrique selon la revendication 4, **caractérisé en ce que** les éléments raidisseurs (12) sont formés sur les deux flasques de palier (6, 7) de façon à être bombés vers l'extérieur.

6. Moteur électrique selon l'une des revendications précédentes, **caractérisé en ce que** les éléments raidisseurs (12) sont réalisés sous forme de nervures.

7. Moteur électrique selon l'une des revendications précédentes, **caractérisé en ce que** les deux flasques de palier (6, 7) comprennent chacun un moyeu (10, 10') à titre de siège (11) chacun pour un palier d'arbre du rotor (2).

8. Moteur électrique selon la revendication 7, **caractérisé en ce qu'**un capteur (13), en particulier un capteur de vitesse de rotation ou un capteur de détection de position du rotor est disposé sur le moyeu (10, 10').

9. Moteur électrique selon l'une des revendications 7 ou 8, **caractérisé en ce que** les deux flasques de palier (6, 7) sont formés chacun d'une seule pièce avec le moyeu (10).

10. Moteur électrique selon la revendication 9, **caractérisé en ce que** le moyeu (10) est intégré dans le capot (9).

11. Moteur électrique selon l'une des revendications 7 ou 8, **caractérisé en ce que** le moyeu (10') est réalisé sous forme d'une pièce séparée et est monté, en particulier riveté sur le capot (9').

12. Moteur électrique selon la revendication 11, **caractérisé en ce que** le moyeu (10') est une pièce à usiner percée ou tournée en métal.

13. Appareil ménager, en particulier pour l'entretien des pièces de linge, comprenant un moteur électrique (1) selon l'une des revendications précédentes.
